# EUROPEAN PATENT SPECIFICATION

(11) **EP 0 647 391 B1**
(45) Date of publication and mention of the grant of the patent: **14.03.2001**
(21) Application number: 94202889.5
(22) Date of filing: 05.10.1994
(51) Int. Cl.: A01J 7/00

(54) **A construction for automatically milking animals**
Konstruktion zum automatischen Melken von Tieren
Dispositif de traite automatique d'animaux

(30) Priority: 11.10.1993 NL 9301752
(43) Date of publication of application: 12.04.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 194 729
- EP-A- 0 545 916
- EP-A- 0 566 200
- DE-A- 4 113 700

## Description

The invention relates to a construction for automatically milking animals as described in the preamble of claim 1, see e.g. EP-A-0 545 916.

Such arrangements are known.

In constructions of this type the teat cups may be moved by means of an arm to under the udder of an animal to be milked and connected one after the other. The height of the teats above the floor of the box causes certain restrictions for the dimensions of the robot arm. Especially with cows having relatively short legs the height between the teats and the floor is relatively small.

The invention has for its object to improve a construction of the above-mentioned type.

To that end, the construction is characterized by the features as defined in the characterizing part of claim 1. In order to prevent the tubes from sagging, it is possible to position the lower side of the milking robot head relatively low to the soil, while during milking the teat cups can move freely at different distances from each other. A simple manner to stiffen the tubes is obtained, in accordance with the invention, in that a loop-shaped tube comprises at least two tubes, which are arranged side-by-side and are connected to each other.

According to a preferred feature of the invention the connection of the loop-shaped tubes can be realized by wrapping them together. So as to obtain as compact a construction as possible, the first portion of the tube is located, in accordance with a further feature of the invention, in an approximately horizontal plane, while a second portion of the tube is in the shape of a loop and is located in a predominantly vertical plane. In accordance with a further feature of the invention, the loop-shaped portion is located at that side of the robot head of the milking robot that is remote from the teat cups. In accordance with a still further feature of the invention, the tube includes a milk tube and a pulsation tube, which are connected to each other. In said case, in accordance with a further feature of the invention, the milk tube and the pulsation tube are only connected to each other along the first portion of the tube. In accordance with an other feature of the invention, the loop-shaped portion of the tube is of a height which is less than or substantially equal to the length of the teat cups. The robot is of such a design, in accordance with a still further feature of the invention, that animals having teats less than 30 cms high can be milked. Thus, it is possible to milk cows with low-hanging udders.

In accordance with a further feature of the invention, for the lateral displacement of the robot head a parallelogram structure is provided. In accordance with another feature of the invention, all teat cups are connected to a holder of a robot arm by means of a cable. In this situation, in accordance with a still further feature of the invention, the cable is arranged in the robot arm in the shape of a loop, whilst the loop is passed around a roller element which is pivotally attached to the end of a piston rod of the cylinder. By means of the cable, a teat cup can be withdrawn to the holder of the robot arm.

For the determination of the position of the teats, the construction is provided, in accordance with a further feature of the invention, with a detection member attached to a side wall of a milking box forming part of the construction, and capable of being moved in the longitudinal direction of the side wall. Consequently, the detection member does not depend on the robot arm and can therefore guide the robot arm, as it were, to the teats. In accordance with a further feature of the invention, the construction includes a detection member which is pivotal about an upwardly directed shaft and movable in a direction approximately perpendicular to the relevant shaft. By pivoting the detection member, the position of the teats can thus be determined in a simple manner. So as to ensure a still better accessibility of the teats, the detection member can be pivoted, in accordance with a further feature of the invention, about a horizontal shaft. In accordance with a still further feature of the invention, the detection member is provided with shielding means, which are arranged such that contaminants, such as e.g. dung, cannot affect the action of the detection member. Thus, it is possible to keep the detection member operative in difficult circumstances i.e. in a highly contaminated environment. In accordance with a further feature of the invention, the shielding means are constituted by a tapering hollow sleeve. In accordance with a still further feature of the invention, the detection member is attached aside of the milking box to a frame. To enable a proper accessibility of the teats, the detection member in accordance with the invention includes means which render it possible to move the detection member three-dimensionally. In accordance with an other feature of the invention, the detection member and the robot cover are displaced with the aid of pneumatic cylinders and/or stepping motors. In accordance with a further feature of the invention, the detection member is preferably constituted by a laser.

In accordance with a further feature of the invention, the milking robot includes a computer program, which is implemented such that the milking robot is switched off when a significant disturbance is created, e.g. the robot head becoming defective. In this way, uncontrollable situations are prevented from occurring, in which the animal might get hurt.

In accordance with a further feature of the invention, the milking robot includes a radiographic system, with the aid of which an operator is warned when the milking robot has ceased functioning. In this manner, the operator is immediately warned that something is malfunctioning, so that he can immediately take measures to eliminate the failure.

For a better understanding of the invention and to show how the same may be carried into effect, reference will now be made, by way of example, to the accompanying drawings, in which:
Figure 1 is a side view of a milking cluster incorporating a milking robot, in which the circumference of a milk animal, in the present case a cow, is shown;
Figure 2 is a plan view in accordance with Figure 1, in which a detection member for determining the position of the teats is arranged next to the milking parlour;
Figure 3 shows the front portion of the robot arm of Figure 1, in which the teat cups are arrayed in a central position;
Figure 4 is a plan view of the milking robot head as shown in Figure 3;
Figure 5 illustrates the teat cups in the lifted state;
Figure 6 shows the position of the milking robot head when a front teat cup must be connected again, whilst the rear teat cups are already in the connected state;
Figure 7 is a plan view of the teat cups, in which at the left-hand side of the lay-out of the drawing the arrangement for connecting the teat cups to the teats is shown, whilst at the right-hand side of the drawing the teat cups are shown after they have already been connected to the teats, broken lines indicating the position of the outermost teat cup holders during renewed connection of an inadvertently disconnected front teat cup, and
Figure 8 shows an alternative embodiment of the robot head, in which a holder for a teat cup near this teat cup is provided with a vertical pivot shaft, about which the relevant teat cup can be rotated.

Corresponding components in the drawings have been given the same reference numerals. The invention is in no way limited to the embodiments shown and described here; they only serve by way of illustration of the inventive idea.

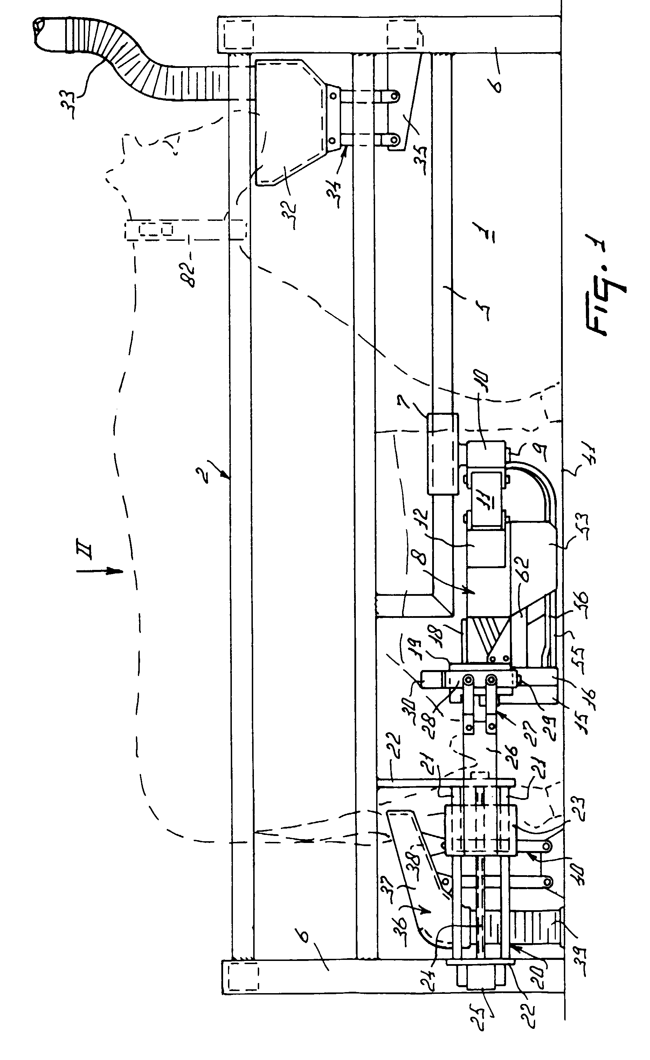

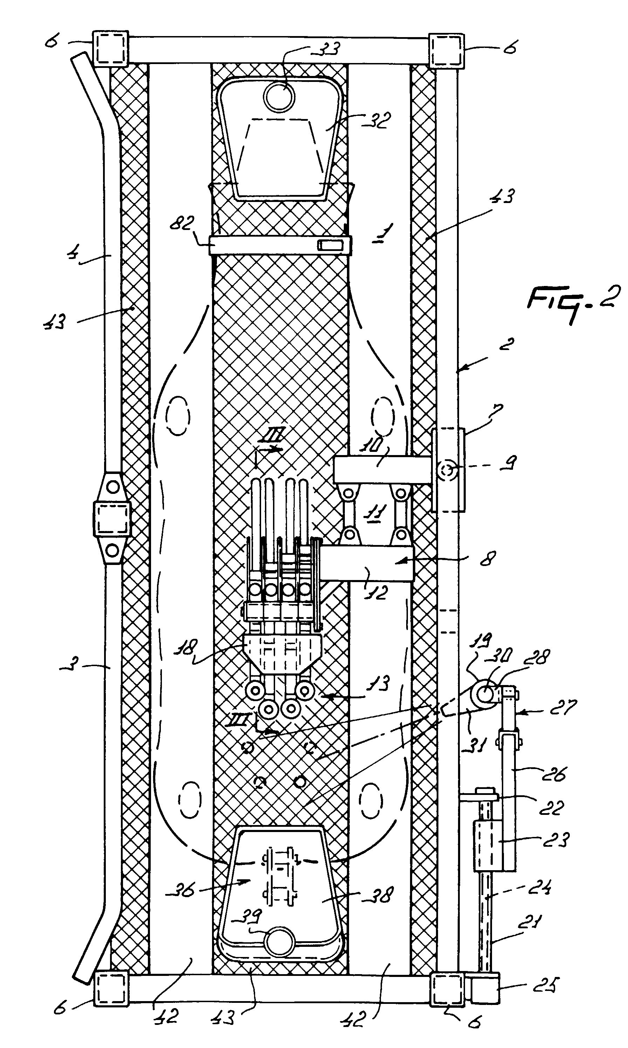

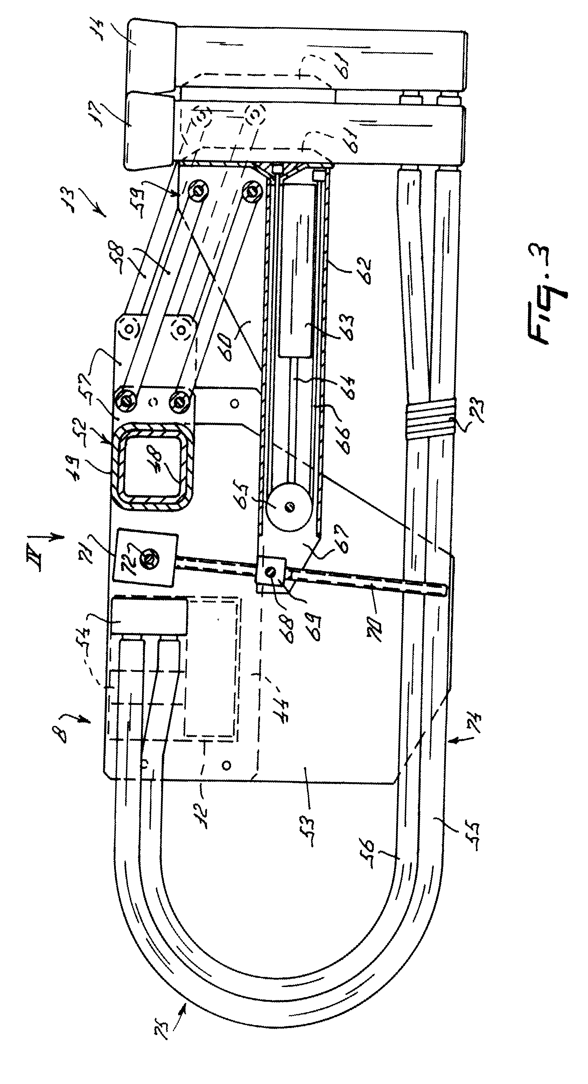

Figure 1 is a side view of a milking box 1, in which the contours of a cow are shown. The milking box 1 includes a railing 2 and is provided at one side with an entrance door 3 and an exit door 4 (Figure 2). At the facing side of the entrance and exit doors, the railing 2 of the milking box 1 is fitted with a longitudinal straight guide 5, which has one end connected to a girder 6 of the milking box 1 and its other end to the side wall of the railing 2. A slidable sleeve 7, which can be moved by a motor (not shown), is accommodated on the straight guide 5. Attached to the sleeve 7 is a milking robot 8 which by shifting of the sleeve 7 moves the milking robot 8 in the longitudinal direction of the milking box 1. A vertical shaft 9, about which a horizontal beam 10 of the milking robot 8 is rotatably attached, is secured to the bottom side of the sleeve 7. A second beam 12 is arranged parallel to the beam 10, at some distance there-from by means of a four-bar linkage 11. Using a cylinder (not shown), the second beam 12 can be moved relative to the first beam 10 in a horizontal plane, so that a robot head 13, which comprises teat cups 14 to 17 and is attached to the end of the beam 12, can be moved transversely in the milking box. At its upper side, the milking robot head 13 is provided with a cover plate 18 which is slidable towards the teat cups and which, when the teat cups 14 to 17 are not connected to the teats, covers the apertures of the teat cups. At that side of the milking box 1 where the longitudinal straight guide 5 for the milking robot 8 is arranged, a movable detector 19 is disposed, which preferably is constituted by a laser. The position of the teats of an animal to be milked standing in the milking box 1 can be determined with the aid of the detector 19. The detector 19 is connected to a second longitudinal straight guide 20, which renders it possible to slide the detector 19 in the longitudinal direction of the box. The second longitudinal straight guide 20 comprises two spaced-apart rods 21, which are arranged one below the other next to the milking box 1 and have one end connected to the railing 2 of the milking box 1 via two girders 22. A second sleeve 23 is disposed in such a manner around the two longitudinal gitudinal straight guides 20 that it is slidable in the direction of the milking box 1. The second sleeve 23 can be moved along the two longitudinal straight guides 20 by means of a threaded spindle, which is inserted between the two longitudinal straight guides 20 and through the sleeve 23 and is driven by a stepping motor 25. Extending in the longitudinal direction of the milking box 1, the second sleeve 23 is provided with an arm 26 which at its end is provided with a second four-bar linkage 27, to which, extending transversely of the longitudinal direction of the milking box 1, a U-shaped holder 28 is attached. The detector 19 is clamped pivotally about a vertical shaft 29, between the U-shaped holder 28. The detector 19 can be pivoted about the vertical shaft 29 by means of a stepping motor 30 disposed on top of the U-shaped holder 28. The detector 29 is comprised of a vertically arranged cylindrical housing, on top of which a truncated cone-shaped jacket 31 is placed at a square angle. In the present embodiment, the cylindrical housing 19 accommodates a laser, which transmits a signal via a window in this housing and through the truncated cone-shaped jacket 31. It will be obvious that the detector may alternatively be formed by e.g. an ultrasonic sensor. The truncated cone-shaped jacket 31 shields the window in the detector 19, so that the laser and/or e.g. the ultrasonic sensor will not so easily be put out of order by contamination. In addition to the fact that the detector 19 can be moved in the longitudinal direction of the milking box 1, it is also possible for the detector to be moved in height by means of a stepping motor (not shown), using the second four-bar linkage 27.

Near the leading side of the milking box 1 there is further arranged a feeding trough 32, which has at its upper side a flexible tube 33 which is connected to an automatic concentrate dosing device (not shown), for automatically discharging concentrate into the feeding trough 32. At the bottom side, the feeding trough 32 is connected to a vertically arranged third four-bar linkage 34, which has its other end connected to a beam 35 connected horizontally to the railing 2. Using a cylinder (not shown) which is connected to an arm of the third four-bar linkage 34, the feeding trough can be swivelled from the milking box 1 to thereoutside, so that the cow can no longer eat from the feeding trough 32.

The milking box 1 further incorporates, arranged near its trailing end, a dung collecting member 36. The dung collecting member 36 includes a container 37 which has a bottom 38 which extends obliquely downwardly from the cow. The bottom 38 encloses an angle of preferably approximately 20° with the horizontal. Connected to the lowest part of the bottom 38 there is a flexible discharge pipe 39 which leads to a dung cellar (not shown) under the milking box 1. At its bottom side, the container 37 is connected to a vertically arranged fourth four-bar linkage 40, which has its other side connected to the floor 41 of the milking box 1. By means of a cylinder (not shown) connected to the fourth four-bar linkage 40, it is possible to swing the container 37 aside to outside the milking box 1, so that, when a cow enters the milking box 1 via the entrance door 3, it will not be obstructed by the container 37. It will be obvious that, when the cow has taken up her position in the milking box 1, the container 37 will again be swivelled towards the cow, so that, when the cow drops dung, it will be collected in the container 37 and directly discharged into the dung cellar via the flexible discharge pipe 39. Since the bottom 38 is arranged at an oblique angle, the dropping rate of the dung will be low and thus the dung will be prevented from splashing on hitting the bottom 38.

To make the stay of the cow in the milking box 1 a pleasant stay, the floor 41 is provided in the region of the cows legs, with slats 42 which together form a continuous floor. Between and next to the slats 42, the floor 41 is further designed as a grid floor 43. The dung cellar (not shown) is located under the grid floor 43, so that dirt drops into the dung cellar via the grid 43.

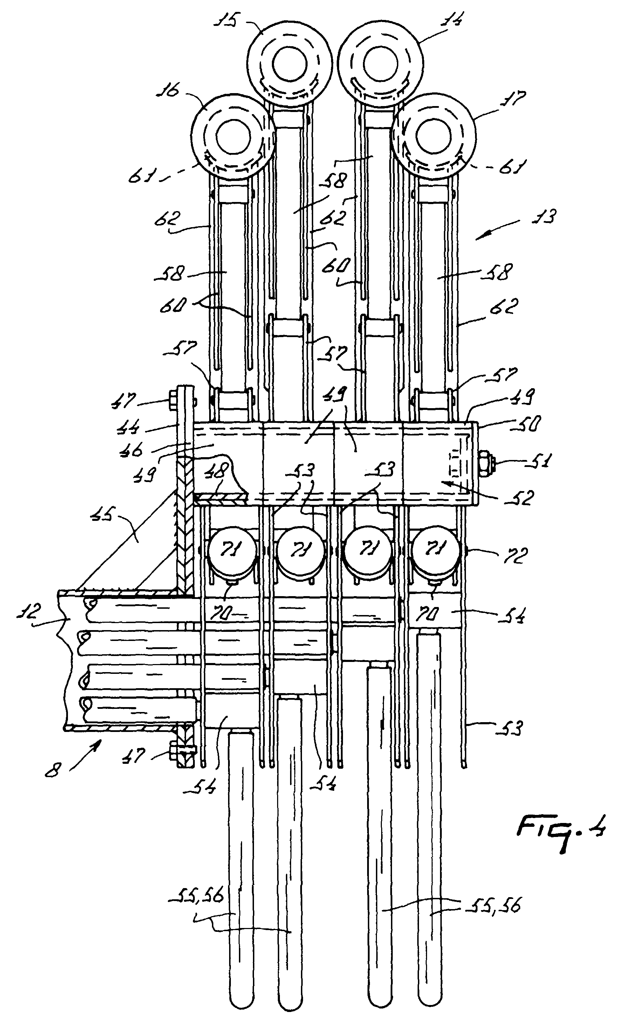

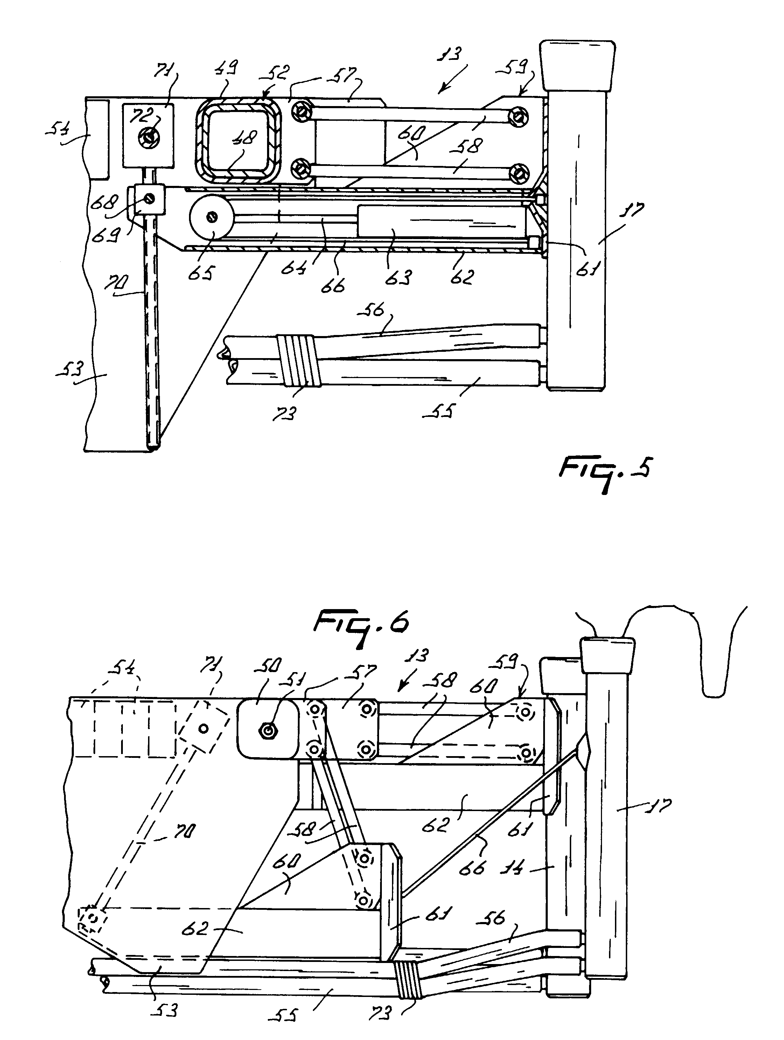

Figures 3 to 8 are further illustrations of the construction of the robot head 13. Figure 4 shows a portion of the second beam 12 of the milking robot 8, and it is shown that the second beam 12 is provided at its end with a plate 44, by means of which the robot head 13 is secured to the second beam 12. A stay rod 45 is arranged between the plate 44 and the second beam 12. The robot head 13 also includes a mounting plate 46 which corresponds to the plate 44 and is detachably bolted to the plate 44 by means of bolts 47. In a position perpendicular to the mounting plate 46 there is a box-like supporting beam 48, around which four units 49 are pushed which are locked by means of an end plate 50 with a bolt 51. The structure of each of the units 49 will now be described in greater detail with reference to Figure 3.

Each unit 49 includes a box-like carrier beam 52, which can be pushed over the supporting beam 48. The carrier beam 52 is provided with two spaced-apart plates 53, between which a connecting block 54 for a milk and pulsation tube 55, 56 is secured. At the leading side of the carrier beam 52, two spaced-apart lugs 57 are disposed, to which a rod system 58 forming a deformable quadrangle is connected. The rod system 58, which forms a deformable quadrangle, has its other end connected to a holder 59 for a teat cup (14; 15; 16; 17). Each of the holders 59 is assembled from two spaced-apart plates 60 which at their ends are interconnected so as to form a curved seat 61, against which a teat cup can bear. By means of their lower sides, the plates 60 are secured on a tubular holder 62, in which a cylinder 43 is accommodated. At the end of the piston rod 64 of the cylinder 63, a roller element 65 is disposed, around which a flexible cord 66 is passed. The cord 66 has one end connected to the tubular holder 62 and the other end to the teat cup. When a teat cup has been connected to a teat, the cylinder 63 is enabled and it is thus possible to pull the cord 66 from the tubular holder 62. When a teat cup is to be disconnected from a teat, the cylinder 63 is energized, as a result of which the cord 66 is retracted into the tubular holder 62, whereafter the teat cup is pulled up against the seat 61. At the other end of the tubular holder 62, two spaced-apart lugs 67 are attached, between which, pivotal about a horizontal shaft 68, a nut 69 is clamped. Inserted through the nut 69 is a threaded end 70, which has one end connected to a stepping motor 71. The stepping motor 71 is clamped between the plates 53 and is rotatable about a horizontal shaft 72. Using the transmission-element 70 which is controlled by the motor 71, it is possible to operate the lifting structure 58, 59, 60, 62, 70, 71, and thus to move the teat cups and also the holder 59 upwardly. Furthermore, each of the units 49 can be replaced individually when getting out of order.

Near the teat cups, the milk tube 55 and the pulsation tube 56 are wrapped together by a wrapping 73. The wrapping 73 may be in the form of a length of tape, an iron wire, a bandage, etc. Because of the wrapping 73, the first portion 74 of the milk and pulsation tubes 55, 56, which extend from the teat cup to just behind the plates 53, is relatively rigid and consequently oriented more or less in a horizontal plane. The second portion 75 of the milk and pulsation tubes 55, 56 extends in the shape of a loop and is located in a vertical plane. The second portion 75 of the milk and pulsation tubes 55, 56 is relatively flexible. During the upward motion of the teat cups, the first portion 74 will therefore bend to a minimum extent, whilst the second portion 75 bends relatively much. Since the first portion 74 is relatively rigid, the milk and pulsation tubes 55, 56 will be prevented from sagging and landing on the floor 41 of the milking box 1. An additional advantage is that, consequently, the head 13 of the milking robot can be moved at a relatively low level along the floor 41, without portions of the milking robot 8 coming into contact with the floor 41 of the milking box 1.

In the second embodiment as shown in Figure 8, the teat cups are pivotal about an upwardly directed shaft with the aid of a pivotal structure 76. The pivotal structure 76 includes a tube 77 attached to the ends of the plates 60. A pivotal shaft 78 is passed through the tube 77, which tube is connected at its bottom side to a stepping motor 79, which itself is rigidly connected to the tubular holder 62 via a support 80. The seat 61 of the teat cup is rigidly connected by means of lugs 81 to the pivotal shaft 78. By energizing the stepping motor 79, it is possible to rotate the seat 61 with the teat cup around the shaft 78. In this manner also teats which are very remote from each other, which e.g. in a plan view are arranged more or less in a square, can easily be reached by the teat cups 14 to 17 without the teat cups forming an obstruction to each other.

The mode of operation of the present construction for automatically milking animals will now be described in greater detail.

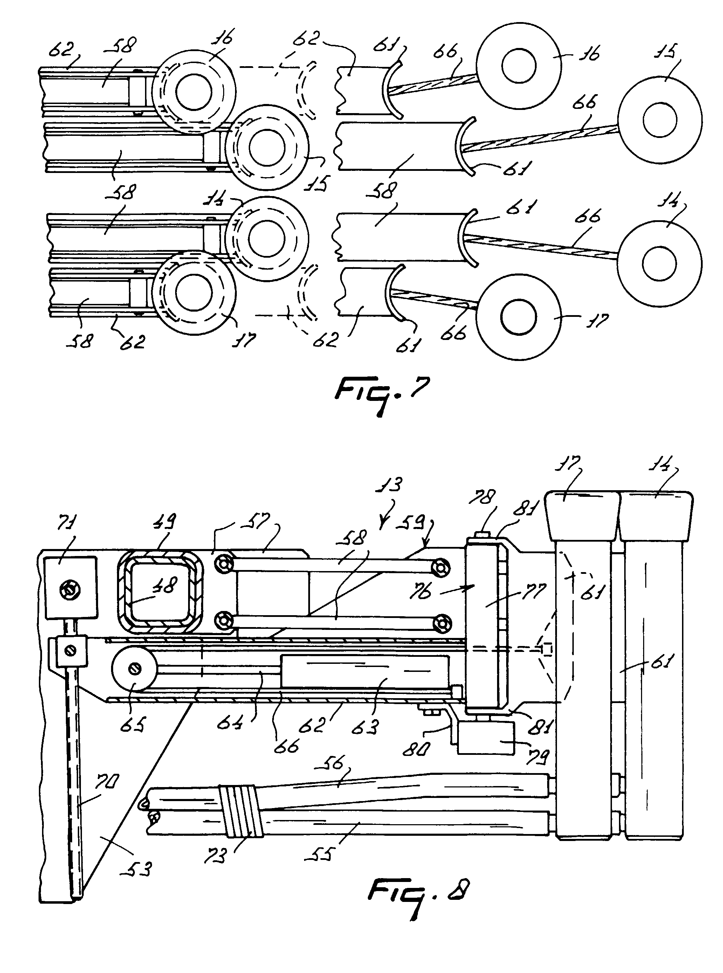

When a cow has entered the milking box 1 via the entrance door 3, this is recorded on the basis of the cow identification collar 82 around the neck of the cow and concentrate centrate is discharged in the feeding trough 32 via the dosing implement. Thereafter the dung collecting member 36 is pivoted to near the rear side of the cow. In consequence thereof the detector 19 is moved in the longitudinal direction of the milking box 1, so that the teats of the cow arrive within the measuring range (taken in the vertical plane) of the detector. By means of the second four-bar linkage 27, the height at which the detector beam of the detector 19 is now located is adjusted such that, also in the horizontal plane, the teats come within the measuring range of the detector 19. Thereafter the stepping motor 30 is energized, so that the detector is pivoted about the vertical shaft 29. The detector 19 is preferably pivoted through an angle of approximately 25°. After the position of the four teats has been determined with the aid of the detector 19, the robot head 13 is pivoted to under the cow and, using the four-bar linkage 11, the robot head 13 is positioned in the lateral direction of the milking box 1. Thereafter the teat cups 14 to 17, by energizing the stepping motor 71, are moved to the central position as shown in Figure 3. Thereafter the robot head is moved in the longitudinal direction of the milking box 1 along the longitudinal straight guide 5, and the teat cup 14 is positioned under the left-hand rear teat. The stepping motor 71 of the teat cup 14 is then energized again, whereafter the teat cup 14 is lifted upwardly, as shown in Figure 5. After the teat cup has been evacuated via the milk tube 55, this cup is connected by this vacuum to the left-hand rear teat and thereafter the cylinder 63 of the teat cup 14 is disabled, so that the teat cup can get loose from the seat 61. Thereafter the teat cups 15, 16 and 17 are connected in the same manner one after the other to the further teats of the cow. In the right-hand half of Figure 7 it is illustrated how the teat cups 14 to 17 are arranged during milking. If now the teat cup 14 is inadvertently kicked from the teat or gets disconnected therefrom in any other way, the teat cup is immediately pulled up against the seat 61 of the relevant holder 59. So as to be able to connect the cup 14 again without the need for the cup 17 to be removed, the holder 59 of the teat cup 17 is thereafter pivoted downwards by means of the stepping motor 71 to the position shown in Figure 6. The holder 59 of the teat cup 17 is then in the position shown in Figure 7 by broken lines. Thereafter the holder 59 of the teat cup 14 is again moved towards the left-hand rear teat, all this in such a manner that the teat cup 14 arrives in a position such that its aperture is in a position under the left-hand rear teat. Thereafter the stepping motor 71 is energized again and the teat cup 14 is moved up and is connected to the teat. The robot head 13 can then again be moved away from the teat, so that the initial situation, such as it is shown at the right-hand half of Figure 7, is obtained. The teat cup 14 is then again in the connected state, without the need for disconnecting the further teat cups. It will be obvious that this procedure results in a considerable gain in time, and that the milking procedure of the other quarters need not be interrupted when the disconnected cup is to be connected to the teat again.

## Claims

1. A construction for automatically milking animals, such as cows, comprising a milking robot (8) for automatically connecting teat cups (14; 15; 16; 17) to the teats of an animal, characterized in that a teat cup (14; 15; 16; 17) is directly attached to the end of a loop-shaped tube (55; 56), which tube can be distinguished in at least two portions (74; 75), of which a first portion (74) is directly connected to the teat cup (14; 15; 16; 17) and is relatively rigid, while a second portion (75) of the tube is relatively flexible and allows the teat cup (14; 15; 16; 17) to move freely up and down and to reciprocate with respect to the milking robot (8).

2. A construction as claimed in claim 1, characterized in that the loop-shaped tube (55; 56) comprises at least two tubes (55; 56), which are arranged side-by-side and are connected to each other.

3. A construction as claimed in claim 2, characterized in that the loop-shaped tubes (55; 56) are wrapped together.

4. A construction as claimed in any one of claims 1 to 3, characterized in that the first portion (74) of the tube is located in an approximately horizontal plane.

5. A construction as claimed in any one of the preceding claims, characterized in that the second portion (75) of the tube is in the shape of a loop and is located in a predominantly vertical plane.

6. A construction as claimed in claim 5, characterized in that the loop-shaped portion (75) is located at that side of the robot head (13) of the milking robot (8) that is remote from the teat cups (14; 15; 16; 17).

7. A construction as claimed in any one of the preceding claims, characterized in that the tube includes a milking tube (55) and a pulsation tube (56), which are connected to each other.

8. A construction as claimed in claim 7, characterized in that the milk tube (55) and the pulsation tube (56) are only connected to each other along the first portion of the tube.

9. A construction as claimed in any one of the preceding claims, characterized in that the loop-shaped portion (75) of the tube has a height which is less than or substantially equal to the length of the teat cups (14; 15; 16; 17).

10. A construction as claimed in any one of the preceding claims, characterized in that the robot (8) is of such a design that animals having a teat height of less than 30 cms can be milked.

11. A construction as claimed in any one of the preceding claims, characterized in that the robot head (13) is arranged such as to be laterally movable by means of a parallelogram structure (11).

12. A construction as claimed in any one of the preceding claims, characterized in that each of the teat cups (14; 15; 16; 17) is connected to a holder (59) of the robot arm by means of a cable (66).

13. A construction as claimed in claim 12, characterized in that the cable (66) is disposed in the robot arm in such a manner as to form a loop, the loop being passed around a roller element (65) which is pivotally attached to the end of a piston rod (64) of a cylinder (63).

14. A construction as claimed in any one of the preceding claims, characterized in that the construction includes a detection member (19) attached to a side wall of a milking box (1) forming part of the construction, and capable of being moved in the longitudinal direction of the side wall.

15. A construction as claimed in any one of the preceding claims, characterized in that the construction includes a detection member (19) which is pivotal about an upwardly directed shaft (29) and movable in a direction approximately perpendicular to the relevant shaft.

16. A construction as claimed in claim 14 or 15, characterized in that the detection member (19) is pivotal about a horizontal shaft.

17. A construction as claimed in any one of claims 14 to 16, characterized in that the detection member (19) includes shielding means (31), which are arranged such that contaminants, e.g. dung, do not affect the proper action of the detection member (19).

18. A construction as claimed in claim 17, characterized in that the shielding means (31) are constituted by a tapering hollow sleeve (31).

19. A construction as claimed in any one of claims 14 to 18, characterized in that the detection member (19) is disposed aside of the milking box (1).

20. A construction as claimed in any one of claims 14 to 19, characterized in that the detection member (19) is attached to a frame of the milking box (1).

21. A construction as claimed in any one of claims 14 to 20, characterized in that the detection member (19) includes means which render it possible to move the detection member (19) three-dimensionally.

22. A construction as claimed in any one of claims 14 to 21, characterized in that the detection member (19) and the robot cover (18) are displaced with the aid of pneumatic cylinders and/or stepping motors.

23. A construction as claimed in any one of claims 14 to 22, characterized in that the detection member (19) is constituted by a laser.

24. A construction as claimed in any one of the preceding claims, characterized in that the milking robot (8) includes a computer program which is implemented such that the milking robot (8) is switched off when a significant disturbance occurs, i.e. the robot head (13) becoming defective.

25. A construction as claimed in any one of the preceding claims, characterized in that the milking robot (8) includes a radiographic paging system, by means of which the operator is warned when the milking robot (8) has ceased functioning.

26. A construction as claimed in claim 25, characterized in that the radiographic paging system includes a semaphone.

## Patentansprüche

1. Vorrichtung zum automatischen Melken von Tieren, wie z. B. Kühen, mit einem Melkroboter (8) zum automatischen Anschließen von Zitzenbechern (14; 15; 16; 17) an die Zitzen eines Tieres,
dadurch gekennzeichnet, daß ein Zitzenbecher (14; 15; 16; 17) unmittelbar am Ende einer schlaufenförmigen Leitung (55; 56) angebracht ist, die in mindestens zwei Abschnitte (74; 75) unterteilbar ist, von denen ein erster Abschnitt (74) unmittelbar mit dem Zitzenbecher (14; 15; 16; 17) verbunden und relativ starr ist, während ein zweiter Abschnitt (75) der Leitung relativ flexibel ist und es dem Zitzenbecher (14; 15; 16; 17) ermöglicht, sich relativ zu dem Melkroboter (8) frei nach oben und unten und hin und zurück zu bewegen.

2. Vorrichtung nach Anspruch 1,
dadurch gekennzeichnet, daß die schlaufenförmige Leitung (55; 56) mindestens zwei Leitungen (55; 56) umfaßt, die nebeneinander angeordnet und miteinander verbunden sind.

3. Vorrichtung nach Anspruch 2,
dadurch gekennzeichnet, daß die schlaufenförmigen Leitungen (55; 56) zusammengebunden sind.

4. Vorrichtung nach einem der Ansprüche 1 bis 3,
dadurch gekennzeichnet, daß der erste Abschnitt (74) der Leitung in einer etwa horizontalen Ebene angeordnet ist.

5. Vorrichtung nach einem der vorhergehenden Ansprüche,
dadurch gekennzeichnet, daß der zweite Abschnitt (75) der Leitung in Form einer Schlaufe und in einer überwiegend vertikalen Ebene angeordnet ist.

6. Vorrichtung nach Anspruch 5,
dadurch gekennzeichnet, daß der schlaufenförmige Abschnitt (75) auf der Seite des Roboterkopfes (13) des Melkroboters (8) angeordnet ist, der von den Zitzenbechern (14; 15; 16; 17) entfernt ist.

7. Vorrichtung nach einem der vorhergehenden Ansprüche,
dadurch gekennzeichnet, daß die Leitung eine Milchleitung (55) und eine Pulsierleitung (56) umfaßt, die miteinander verbunden sind.

8. Vorrichtung nach Anspruch 7,
dadurch gekennzeichnet, daß die Milchleitung (55) und die Pulsierleitung (56) nur über die Länge des ersten Abschnittes der Leitung miteinander verbunden sind.

9. Vorrichtung nach einem der vorhergehenden Abschnitte,
dadurch gekennzeichnet, daß der schlaufenförmige Abschnitt (75) der Leitung eine Höhe aufweist, die geringer als oder im wesentlichen gleich der Länge der Zitzenbecher (14; 15; 16; 17) ist.

10. Vorrichtung nach einem der vorhergehenden Ansprüche,
dadurch gekennzeichnet, daß der Roboter (8) derart ausgebildet ist, daß Tiere mit einer Zitzenlänge von weniger als 30 cm gemolken werden können.

11. Vorrichtung nach einem der vorhergehenden Ansprüche,
dadurch gekennzeichnet, daß der Roboterkopf (13) derart angeordnet ist, daß der mittels einer Parallelogramm-Führung (11) seitwärts bewegbar ist.

12. Vorrichtung nach einem der vorhergehenden Ansprüche,
dadurch gekennzeichnet, daß jeder der Zitzenbecher (14; 15; 16; 17) durch eine Schnur (66) mit einem Halter (59) des Roboterarmes verbunden ist.

13. Vorrichtung nach Anspruch 12,
dadurch gekennzeichnet, daß die Schnur (66) in dem Roboterarm derart angeordnet ist, daß sie eine Schlaufe bildet, wobei die Schlaufe um eine Rolle (65) geführt ist, die am Ende einer Kolbenstange (64) eines Zylinders (63) drehbar angebracht ist.

14. Vorrichtung nach einem der vorhergehenden Ansprüche,
dadurch gekennzeichnet, daß die Vorrichtung ein Ermittlungsglied (19) enthält, das an einer Seitenwand einer zur Vorrichtung gehörenden Melkbox (1) angeordnet und in Längsrichtung der Seitenwand bewegbar ist.

15. Vorrichtung nach einem der vorhergehenden Ansprüche,
dadurch gekennzeichnet, daß die Vorrichtung ein Ermittlungsglied (19) enthält, das um eine aufwärts gerichtete Achse (29) drehbar und in einer etwa rechtwinklig zu der betreffenden Achse verlaufenden Richtung bewegbar ist.

16. Vorrichtung nach Anspruch 14 oder 15,
dadurch gekennzeichnet, daß das Ermittlungsglied (19) um eine horizontale Achse drehbar ist.

17. Vorrichtung nach einem der Ansprüche 14 bis 16,
dadurch gekennzeichnet, daß das Ermittlungsglied (19) eine Abschirmvorrichtung (31) aufweist, die derart angeordnet ist, daß Schmutzstoffe, wie z. B. Dung, die ordnungsgemäße Funktion des Ermittlungsgliedes (19) nicht beeinträchtigen.

18. Vorrichtung nach Anspruch 17,
dadurch gekennzeichnet, daß die Abschirmvorrichtung (31) durch eine kegelförmige Hülse (31) gebildet ist.

19. Vorrichtung nach einem der Ansprüche 14 bis 18,
dadurch gekennzeichnet, daß das Ermittlungsglied (19) seitlich der Melkbox (1) angeordnet ist.

20. Vorrichtung nach einem der Ansprüche 14 bis 19,
dadurch gekennzeichnet, daß das Ermittlungsglied (19) an einem Rahmen der Melkbox (1) angebracht ist.

21. Vorrichtung nach einem der Ansprüche 14 bis 20,
dadurch gekennzeichnet, daß das Ermittlungsglied (19) Vorrichtungen enthält, die es ermöglichen, das Ermittlungsglied (19) dreidimensional zu bewegen.

22. Vorrichtung nach einem der Ansprüche 14 bis 21,
dadurch gekennzeichnet, daß das Ermittlungsglied (19) und die Roboterabdeckung (18) mit Hilfe von pneumatischen Zylindern und/oder Schrittmotoren bewegt werden.

23. Vorrichtung nach einem der Ansprüche 14 bis 22,
dadurch gekennzeichnet, daß das Ermittlungsglied (19) durch einen Laser gebildet ist.

24. Vorrichtung nach einem der vorhergehenden Ansprüche,
dadurch gekennzeichnet, daß der Melkroboter (8) ein Computerprogramm enthält, das derart eingerichtet ist, daß der Melkroboter (8) abgeschaltet wird, wenn eine signifikante Störung auftritt, d. h. wenn der Roboterkopf (13) defekt wird.

25. Vorrichtung nach einem der vorhergehenden Ansprüche,
dadurch gekennzeichnet, daß der Melkroboter (8) eine radiographische Personenrufanlage aufweist, mittels der die Bedienungsperson gewarnt wird, wenn der Melkroboter (8) nicht mehr funktioniert.

26. Vorrichtung nach Anspruch 25,
dadurch gekennzeichnet, daß die radiographische Personenrufanlage einen Funksignalgeber enthält.

## Revendications

1. Installation de traite automatique d'animaux, tels que des vaches, comportant un robot de traite (8) pour connecter automatiquement des gobelets trayeurs (14 ; 15 ; 16 ; 17) aux trayons d'un animal, caractérisée en ce qu'un gobelet trayeur (14 ; 15 ; 16 ; 17) est directement fixé à l'extrémité d'un tube en forme de boucle (55 ; 56), lequel tube peut être distingué en au moins deux parties (74 ; 75), dont une première partie (74) est directement connectée au gobelet trayeur (14 ; 15 ; 16 ; 17) et est relativement rigide, tandis qu'une seconde partie (75) du tube est relativement souple et permet au gobelet trayeur (14 ; 15 ; 16 ; 17) de se déplacer librement vers le haut et vers le bas et d'effectuer un mouvement en va-et-vient par rapport au robot de traite (8).

2. Installation selon la revendication 1, caractérisée en ce que le tube en forme de boucle (55 ; 56) comporte au moins deux tubes (55 ; 56), qui sont agencés côte à côte, et sont liés l'un à l'autre.

3. Installation selon la revendication 2, caractérisée en ce que les tubes en forme de boucle (55 ; 56) sont enveloppés ensemble.

4. Installation selon l'une quelconque des revendications précédentes, caractérisée en ce que la première partie (74) du tube est positionnée dans un plan à peu près horizontal.

5. Installation selon l'une quelconque des revendications précédentes, caractérisée en ce que la seconde partie (75) du tube a la forme d'une boucle et est positionnée dans un plan sensiblement vertical.

6. Installation selon la revendication 5, caractérisée en ce que la partie en forme de boucle (75) est positionnée au niveau du côté de la tête de robot (13) du robot de traite (8) qui est éloigné des gobelets trayeurs (14 ; 15 ; 16 ; 17).

7. Installation selon l'une quelconque des revendications précédentes, caractérisée en ce que le tube comporte un tube de traite (55) et un tube de pulsation (56), qui sont liés l'un à l'autre.

8. Installation selon la revendication 7, caractérisée en ce que le tube à lait (55) et le tube de pulsation (56) sont seulement liés l'un à l'autre le long de la première partie du tube.

9. Installation selon l'une quelconque des revendications précédentes, caractérisée en ce que la partie en forme de boucle (75) du tube a une hauteur qui est inférieure, ou sensiblement égale, à la longueur des gobelets trayeurs (14 ; 15 ; 16 ; 17).

10. Installation selon l'une quelconque des revendications précédentes, caractérisée en ce que le robot (8) est d'une conception telle que des animaux ayant une hauteur de trayon inférieure à 30 cm peuvent être traits.

11. Installation selon l'une quelconque des revendications précédentes, caractérisée en ce que la tête de robot (13) est agencée de manière à être mobile latéralement par l'intermédiaire d'une structure en parallélogramme (11).

12. Installation selon l'une quelconque des revendications précédentes, caractérisée en ce que chacun des gobelets trayeurs (14 ; 15 ; 16 ; 17) est connecté à un support (59) du bras de robot par l'intermédiaire d'un câble (66).

13. Installation selon la revendication 12, caractérisée en ce que le câble (66) est disposé dans le bras de robot d'une manière telle qu'il forme une boucle, la boucle étant passée autour d'un élément formant rouleau (65) qui est fixé de manière pivotante à l'extrémité d'une tige de piston (64) d'un vérin (63).

14. Installation selon l'une quelconque des revendications précédentes, caractérisée en ce que l'installation comporte un élément de détection (19) fixé à une paroi latérale d'un box de traite (1) formant une partie de l'installation, et capable d'être déplacé dans la direction longitudinale de la paroi latérale.

15. Installation selon l'une quelconque des revendications précédentes, caractérisée en ce que l'installation comporte un élément de détection (19) qui peut pivoter autour d'un arbre dirigé vers le haut (29), et qui est mobile dans une direction à peu près perpendiculaire à l'arbre concerné.

16. Installation selon l'une quelconque des revendications 14 ou 15, caractérisée en ce que l'élément de détection (19) peut pivoter autour d'un arbre horizontal.

17. Installation selon l'une quelconque des revendications 14 à 16, caractérisée en ce que l'élément de détection (19) comporte des moyens de protection (31), qui sont agencés de telle sorte que des contaminants, par exemple une bouse, n'affectent pas le fonctionnement correct de l'élément de détection (19).

18. Installation selon la revendication 17, caractérisée en ce que les moyens de protection (31) sont constitués d'un manchon creux conique (31).

19. Installation selon l'une quelconque des revendications 14 à 18, caractérisée en ce que l'élément de détection (19) est disposé à côté du box de traite (1).

20. Installation selon l'une quelconque des revendications 14 à 19, caractérisée en ce que l'élément de détection (19) est fixé à un châssis du box de traite (1).

21. Installation selon l'une quelconque des revendications 14 à 20, caractérisée en ce que l'élément de détection (19) comporte des moyens qui permettent de déplacer l'élément de détection (19) de manière tridimensionnelle.

22. Installation selon l'une quelconque des revendications 14 à 21, caractérisée en ce que l'élément de détection (19) et le couvercle de robot (18) sont déplacés à l'aide de vérins pneumatiques et/ou de moteurs pas à pas.

23. Installation selon l'une quelconque des revendications 14 à 22, caractérisée en ce que l'élément de détection (19) est constitué d'un laser.

24. Installation selon l'une quelconque des revendications précédentes, caractérisée en ce que le robot de traite (8) comporte un programme informatique qui est implémenté de telle sorte que le robot de traite (8) est arrêté lorsqu'une perturbation significative survient, c'est-à-dire lorsque la tête de robot (13) devient défectueuse.

25. Installation selon l'une quelconque des revendications précédentes, caractérisée en ce que le robot de traite (8) comporte un système de radiomessagerie, par l'intermédiaire duquel l'opérateur est averti lorsque le robot de traite (8) a cessé de fonctionner.

26. Installation selon la revendication 25, caractérisée en ce que le système de radiomessagerie comporte un sémaphore.
